# DEMANDE DE BREVET EUROPEEN

(11) **EP 3 382 360 A1**
(43) Date de publication de la demande: **03.10.2018**
(21) Numéro de dépôt: 18164047.5
(22) Date de dépôt: 26.03.2018
(51) Int. Cl.: G01L 5/16, B23Q 17/09

(54) **DISPOSITIF DE MESURE D'EFFORTS DE FRAISAGE**

(30) Priorité: 27.03.2017 FR 1752517
(71) Demandeur: Centre Technique des Industries Mécaniques et du Décolletage, 74300 Cluses (FR)
(72) Inventeur: LAURENT, Patrice, 74250 Viuz en Sallaz (FR); JAYR, Cyril, 74800 LA ROCHE SUR FORON (FR); BUSI, Roger, 74960 ANNECY (FR); MOREAU, Vincent, 74300 CLUSES (FR)
(74) Mandataire: Croonenbroek, Thomas Jakob

(57) **Abrégé**

L'invention concerne un dispositif de mesure d'efforts de fraisage (1) configuré pour mesurer au moins deux composantes perpendiculaires (Fx, Fy) d'une force de fraisage exercée sur une pièce à usiner, ledit dispositif de mesure (1) étant caractérisé en ce qu'il comporte :
- une base (2) destinée à fixer le dispositif de mesure d'efforts de fraisage (1) sur une table de machine de fraisage,
- un plateau porte-pièces (3) destiné à fixer une pièce à usiner,
- deux premières parois latérales (4, 5) faisant saillie de la base (2), les premières parois latérales (4, 5) étant :
▪ planes et parallèles entre elles dans une position de repos, et
▪ déformables dans une première direction (X),
- deux deuxièmes parois latérales (6, 7) faisant saillie du plateau porte-pièces (3), les deuxièmes parois latérales (6, 7) étant :
▪ planes, parallèles entre elles et perpendiculaires aux premières parois latérales (4, 5) dans la position de repos, et
▪ déformables dans une deuxième direction (Y) perpendiculaire à la première direction (X),
- un élément de liaison (8 ; 80) reliant les premières parois latérales (4, 5) aux deuxièmes parois latérales (6, 7),
- un premier capteur de déformation (9) configuré pour mesurer une déformation d'au moins une des premières parois latérales (4, 5), et
- un deuxième capteur de déformation (10) configuré pour mesurer une déformation d'au moins une des deuxièmes parois latérales (6, 7).

## Description

La présente invention concerne un dispositif de mesure d'efforts de fraisage configuré pour mesurer au moins deux composantes perpendiculaires d'une force de fraisage exercée en cours d'usinage sur une pièce à usiner.

Le fraisage est un processus industriel d'usinage où l'enlèvement de matière sous forme de copeaux résulte de la combinaison de deux mouvements : la rotation de l'outil de coupe d'une part et l'avancée de la pièce à usiner ou de l'outil de coupe d'autre part.

L'augmentation de la productivité, les contraintes de qualité de l'usinage liées par exemple à l'état de surface des pièces usinées ainsi que l'évolution des matériaux des pièces à usiner, nécessitent la surveillance des paramètres des procédés d'usinage.

La mesure des efforts de fraisage peut notamment permettre à l'opérateur d'optimiser les paramètres du fraisage, par exemple en comparant l'influence de différentes outils, matériaux ou fraiseuses sur les efforts de fraisage ou en observant l'évolution des efforts de fraisage d'une machine dans le temps.

La mesure des efforts de fraisage peut également permettre d'informer l'opérateur de la nécessité de changer de fraise. En effet, une fraise usée ou défectueuse remplacée trop tard, peut conduire à la production de pièces défectueuses et peut augmenter la consommation électrique. A l'inverse, le changement trop fréquent des fraises augmente les coûts de production et ralenti la cadence.

Pour mesurer les efforts de fraisage, on connaît des platines dynamométriques utilisant des capteurs piézoélectriques sensibles aux déformations superficielles d'une table porte-pièces. Il a par exemple été proposé de surveiller les processus de fraisage en temps réel à l'aide d'une platine de mesure de type Kistler (marque déposée) qui permet de mesurer les efforts de coupe selon trois directions d'un repère cartésien : x-l'axe de l'avance, y- l'axe perpendiculaire à l'avance et z- l'axe de rotation de la fraise.

Ces platines piézoélectriques permettent de mesurer les efforts, par la mesure des charges électriques générées par les quartz, suite aux déformations des quartz sous l'effet de la déformation de la structure de la table. La conversion en tension de ces charges permet alors à un convertisseur analogique-numérique de faire une acquisition de ces valeurs.

Malgré de très bonnes performances, ces amplificateurs charge-tension ont tendance à se charger électriquement au fur et à mesure du temps (déviation proportionnelle au temps passé depuis la remise à zéro de l'amplificateur), ce qui est pénalisant et gênant lors d'acquisitions de longue durée ou lors d'essais avec de très faibles efforts d'usinage. La conséquence est que ces platines ne peuvent mesurer sans biais des efforts à dynamique lente, ou des efforts faibles en amplitude.

Un autre inconvénient de ces platines est leur coût élevé.

Un des buts de la présente invention est donc de proposer un dispositif de mesure d'efforts de fraisage configuré pour mesurer au moins deux composantes perpendiculaires d'une force de fraisage exercée en cours d'usinage sur une pièce à usiner, apte à mesurer tous types d'efforts, y compris à dynamique lente ou faibles en amplitude et qui ne soit pas trop couteux.

Pour cela, l'invention propose un dispositif de mesure d'efforts de fraisage configuré pour mesurer au moins deux composantes perpendiculaires d'une force de fraisage exercée sur une pièce à usiner, ledit dispositif de mesure étant caractérisé en ce qu'il comporte :
- une base destinée à fixer le dispositif de mesure d'efforts de fraisage sur une table de machine de fraisage,
- un plateau porte-pièces destiné à fixer une pièce à usiner,
- deux premières parois latérales faisant saillie de la base, les premières parois latérales étant :
   ▪ planes et parallèles entre elles dans une position de repos, et
   ▪ déformables dans une première direction,
- deux deuxièmes parois latérales faisant saillie du plateau porte-pièces, les deuxièmes parois latérales étant :
   ▪ planes, parallèles entre elles et perpendiculaires aux premières parois latérales dans la position de repos, et
   ▪ déformables dans une deuxième direction perpendiculaire à la première direction,
- un élément de liaison reliant les premières parois latérales aux deuxièmes parois latérales,
- un premier capteur de déformation configuré pour mesurer une déformation d'au moins une des premières parois latérales, et
- un deuxième capteur de déformation configuré pour mesurer une déformation d'au moins une des deuxièmes parois latérales.

Le plateau porte-pièces peut ainsi se translater dans une première direction par rapport à l'élément de liaison et une translation de l'élément de liaison par rapport à la base est possible dans une deuxième direction perpendiculaire à la première direction. Le dispositif de mesure d'efforts présente ainsi une structure privilégiant la translation du plateau porte-pièces selon les deux directions perpendiculaires entre elles, les déformations dans ces deux directions étant bien découplées l'une de l'autre.

Les mesures des déformations des premières parois latérales dans la première direction et dans la deuxième direction perpendiculaire, sont représentatives des composantes de l'effort de fraisage exercé sur ladite pièce à usiner. Il est ainsi possible de mesurer les composantes d'une force de fraisage exercée sur une pièce à usiner.

Selon une ou plusieurs caractéristiques du dispositif de mesure d'efforts de fraisage, prise seule ou en combinaison,
- l'élément de liaison comporte :
   ▪ un bloc central,
   ▪ deux éléments de raccord supérieur reliant un côté supérieur du bloc central aux premières parois latérales, et
   ▪ deux éléments de raccord inférieur reliant un côté inférieur du bloc central aux deuxièmes parois latérales, le bloc central étant au moins partiellement agencé entre les premières parois latérales ; Cette réalisation présente l'avantage d'être beaucoup plus compacte,
- le bloc central est agencé entre les premières parois latérales et les deuxièmes parois latérales,
- le bloc central présente une épaisseur supérieure à 2mm,
- les deux premières parois latérales, les deux deuxièmes parois latérales et l'élément de liaison sont délimités par une première rainure en forme de « U » s'étendant dans la première direction et une deuxième rainure en forme de « U », inversée par rapport à la première rainure, s'étendant dans la deuxième direction,
- les formes en « U » des rainures présentent des portions arrondies à la base du « U »,
- les rainures sont réalisées par découpe au fil,
- la base, le plateau porte-pièces, les deux premières parois latérales, les deux deuxièmes parois latérales et l'élément de liaison sont réalisés en une seule pièce ; on obtient ainsi un dispositif de mesure d'efforts très simple qui n'est composé que de quelques composants,
- la base, le plateau porte-pièces, les deux premières et deuxièmes parois latérales et l'élément de liaison sont réalisés par découpe au fil ou par impression 3D,
- le premier capteur de déformation et/ou le deuxième capteur de déformation comporte au moins une jauge de contrainte ; la mesure des efforts de fraisage au moyen de jauges de contraintes est intéressante car ces dernières ne sont pas soumises aux phénomènes de charge et ne nécessitent pas d'amplificateurs coûteux comme les platines piézoélectriques de l'art antérieur,
- le premier capteur de déformation comporte quatre jauges de contrainte câblées en Pont de Wheatstone, deux premières jauges de contrainte étant collées sur l'une des premières parois latérales et deux deuxièmes jauges de contrainte étant collées sur l'autre des premières parois latérales ; ce câblage est très simple et permet de ne prendre en compte que la flexion des premières parois latérales,
- le deuxième capteur de déformation comporte quatre jauges de contrainte câblées en Pont de Wheatstone, deux premières jauges de contrainte étant collées sur l'une des deuxièmes parois latérales et deux deuxièmes jauges de contrainte étant collées sur l'autre des deuxièmes parois latérales ; ce câblage est très simple et permet de ne prendre en compte que la flexion des deuxièmes parois latérales,
- les premières et deuxièmes parois latérales présentent une épaisseur dans la direction de déformation comprise entre 1mm et 2,5mm,
- les parois latérales sont amincies au niveau de leurs raccordements avec l'élément de liaison et/ou au niveau de leurs raccordements avec la base ou le plateau porte-pièces ; cela permet la déformation des parois latérales ou permet d'augmenter la déformation des parois latérales et donc la sensibilité de mesure,
- le dispositif de mesure d'efforts de fraisage comporte un troisième capteur de déformation configuré pour mesurer une troisième composante de la force de fraisage dans une troisième direction perpendiculaire à la première et à la deuxième direction,
- le troisième capteur de déformation comporte des jauges de contrainte en cisaillement,
- la base, le plateau porte-pièces, les deux premières parois latérales, les deux deuxièmes parois latérales et l'élément de liaison sont réalisés en acier inoxydable.

D'autres avantages et caractéristiques de l'invention apparaîtront à la lecture de la description ainsi que sur les figures annexées qui représentent un exemple de réalisation non limitatif de l'invention et sur lesquelles :
- la figure 1a est une vue schématique en perspective d'un premier exemple de réalisation d'un dispositif de mesure d'efforts de fraisage,
- la figure 1b est un exemple de réalisation du câblage d'un premier capteur de déformation du dispositif de mesure d'efforts de la figure 1a,
- la figure 1c est un exemple de réalisation du câblage d'un deuxième capteur de déformation du dispositif de mesure d'efforts de la figure 1a,
- la figure 2 est une vue similaire à figure 1a dans laquelle on a mieux fait apparaitre un bloc central de l'élément de liaison,
- la figure 3 est une vue schématique en perspective d'un deuxième exemple de réalisation d'un dispositif de mesure d'efforts de fraisage,
- la figure 4 est une vue similaire à figure 3 et sur laquelle on a mieux fait apparaitre un bloc central de l'élément de liaison,
- les figures 5a, 5b, 5c sont des vues schématiques du dispositif de mesure de la figure 3, respectivement, de dessus, en coupe A-A et en coupe B-B, des pointillés schématisant les déformations du dispositif en cours d'usinage,
- la figure 6 est une vue similaire à la figure 3 et sur laquelle on a représenté un troisième capteur de déformation du dispositif de mesure d'efforts,
- la figure 7 montre deux exemples de réalisation de dispositifs de mesure d'efforts de fraisage, vus en perspective,
- la figure 8 montre une vue éclatée d'un des dispositifs de mesure de la figure 7,
- les figures 9a, 9b, 9c, 9d sont des vues schématiques du dispositif de mesure d'efforts de la figure 8 à l'état assemblé, respectivement, de dessus, en coupe A-A, en coupe D-D et en coupe B-B,
- la figure 10a montre une vue en coupe du dispositif de mesure d'efforts selon un plan de coupe analogue au plan de coupe D-D de la figure 9c,
- la figure 10b est une vue analogue à la figure 10a sans cache de protection,
- la figure 11a montre une vue en coupe du dispositif de mesure d'efforts selon un plan de coupe analogue au plan de coupe A-A de la figure 9b, en position de repos,
- la figure 11b est une vue analogue à la figure 11a sans cache de protection et sur lequel on a représenté les déformations en cours d'usinage en traits pointillés,
- la figure 12a est une vue en coupe du dispositif de mesure d'efforts selon un plan de coupe analogue au plan de coupe B-B de la figure 11d (perpendiculaire au plan de coupe A-A de la figure 11a), en position de repos,
- la figure 12b est une vue analogue à la figure 12a sans cache de protection et sur lequel on a représenté les déformations en cours d'usinage en traits pointillés, et
- les figures 13a, 13b, 13c et 13d montrent des vues schématiques en coupe d'une platine pour différentes réalisations de liaisons entre les premières et deuxièmes parois latérales et l'élément de liaison, le plateau porte-pièces ou la base, en position de repos et en cours d'usinage.

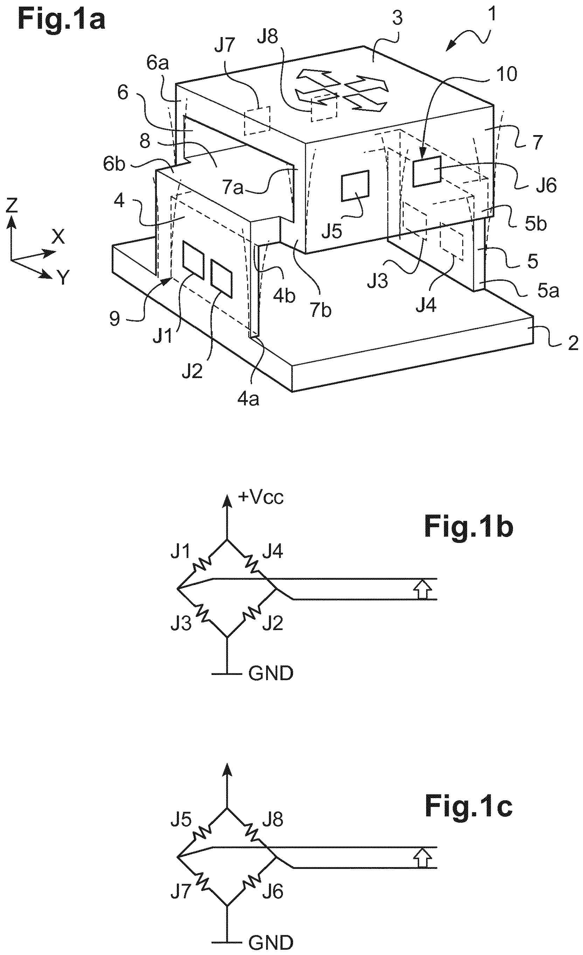

Sur ces figures, les éléments identiques portent les mêmes numéros de référence. Dans la suite de la description, on adoptera à titre non limitatif la première direction X, la deuxième direction Y et la direction verticale Z indiquées sur la figure 1 par le trièdre (X, Y, Z) fixe par rapport au dispositif de mesure. Ces directions correspondent généralement sur la machine de fraisage, à l'axe de l'avance X, l'axe perpendiculaire à l'avance Y et l'axe de rotation de la fraise Z.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

La figure 1a montre un dispositif de mesure d'efforts de fraisage 1 configuré pour mesurer au moins deux composantes perpendiculaires Fx, Fy d'une force de fraisage exercée en cours d'usinage sur une pièce à usiner ou sur un bloc de matière à usiner.

Le dispositif de mesure 1 comporte une base 2, un plateau porte-pièces 3, deux premières parois latérales 4, 5, deux deuxièmes parois latérales 6, 7, un élément de liaison 8, un premier capteur de déformation 9 configuré pour mesurer une déformation d'au moins une des premières parois latérales 4, 5 et un deuxième capteur de déformation 10 configuré pour mesurer une déformation d'au moins une des deuxièmes parois latérales 6, 7.

La base 2 et le plateau porte-pièces 3 sont par exemple plans.

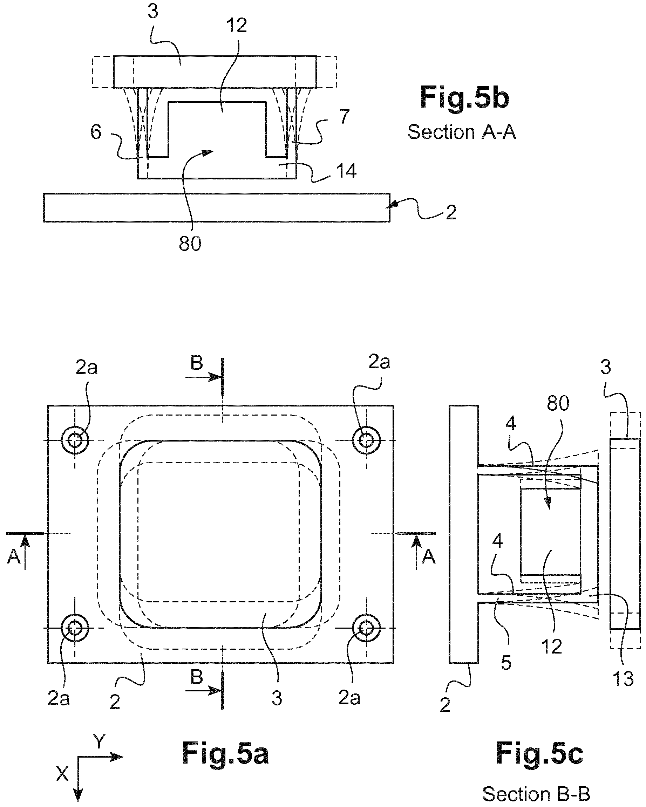

La base 2 est destinée à fixer (ou brider) le dispositif de mesure d'efforts 1 sur une table de machine de fraisage, par exemple au moyen de quatre trous taraudés 2a, agencés aux quatre coins de la base 2 (figure 5a).

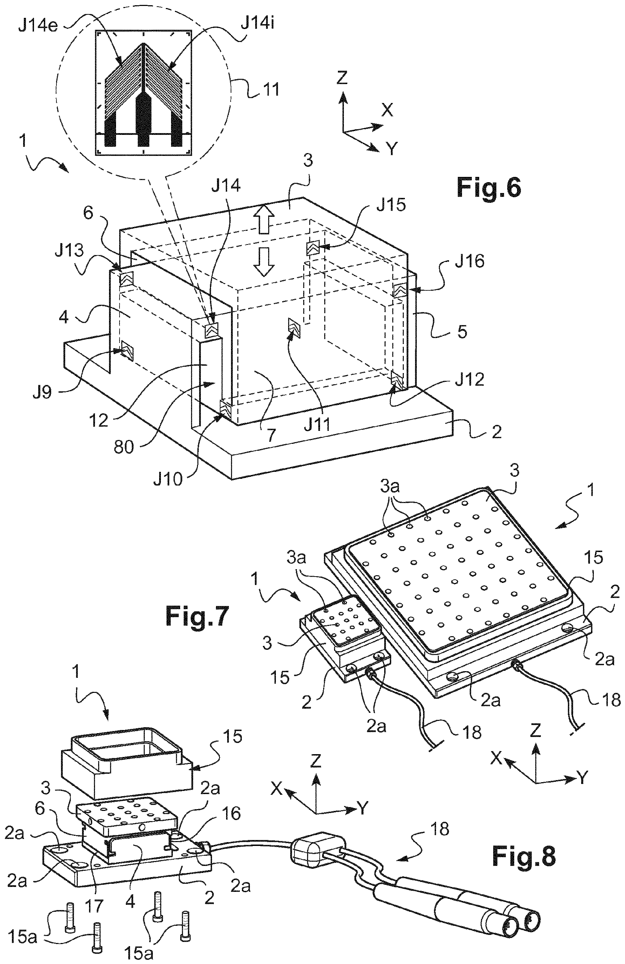

Le plateau porte-pièces 3 (ou plateau supérieur) est destiné à fixer (ou brider) une pièce à usiner ou un bloc de matière à usiner. Le plateau porte-pièces 3 comporte par exemple une plaque présentant un quadrillage de trous taraudés 3a pour fixer la pièce à usiner (figure 7).

Sur la figure 1a, on voit que les deux premières parois latérales 4, 5 sont fixées par leurs premières extrémités 4a, 5a à la base 2. Les premières parois latérales 4, 5 font saillie de la base 2, perpendiculairement à la base 2. Les premières parois latérales 4, 5 sont planes et parallèles entre elles dans une position de repos (traits pleins sur la figure 1a) et déformables dans une première direction X, plus particulièrement au niveau de leurs deuxièmes extrémités 4b, 5b, opposées aux premières extrémités 4a, 5a (traits en pointillés sur la figure 1a).

Les deux deuxièmes parois latérales 6, 7 sont fixées par leurs premières extrémités 6a, 7a au plateau porte-pièces 3. Les deuxièmes parois latérales 6, 7 font saillie du plateau porte-pièces 3, perpendiculairement au plateau porte-pièces 3. Les deuxièmes parois latérales 6, 7 sont planes, parallèles entre elles et perpendiculaires aux premières parois latérales 4, 5 dans la position de repos (traits pleins sur la figure 1a) et déformables dans une deuxième direction Y perpendiculaire à la première direction X, plus particulièrement au niveau de leurs deuxièmes extrémités 6b, 7b, opposées aux premières extrémités 6a, 7a (traits en pointillés sur la figure 1a).

Les premières et deuxièmes parois latérales 4, 5, 6, 7 présentent par exemple une épaisseur dans la direction de déformation comprise entre 1mm et 2,5mm pour présenter l'élasticité leur permettant de se déformer. Comme on le verra plus loin, les parois latérales 4, 5, 6, 7 peuvent aussi présenter des amincissements 21 pour faciliter leurs déformations.

L'élément de liaison 8 relie les premières parois latérales 4, 5 aux deuxièmes parois latérales 6, 7. Plus précisément, l'élément de liaison 8 relie les deuxièmes extrémités 4b, 5b des premières parois latérales 4, 5 aux deuxièmes extrémités 6b, 7b des deuxièmes parois latérales 6, 7.

L'élément de liaison 8 comporte un bloc central, présentant ici une forme générale de plaque, présentant par exemple une épaisseur comprise entre 2mm et 5mm la direction verticale Z. L'élément de liaison 8 s'étend dans la première direction X entre les premières parois latérales 4, 5 et dans la deuxième direction Y perpendiculaire, entre les deuxièmes parois latérales 6, 7.

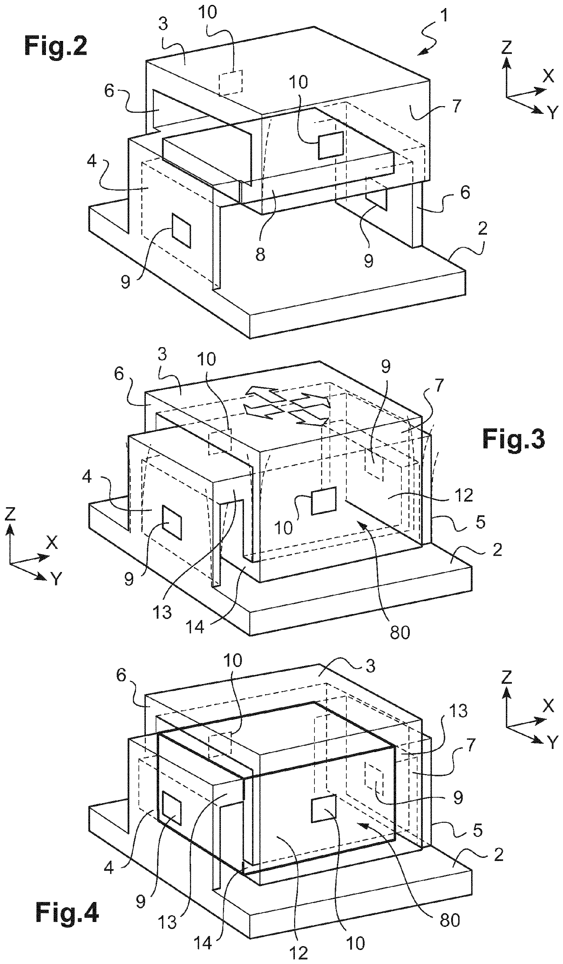

En outre, dans cet exemple et comme mieux visible sur la figure 2, les premières parois latérales 4, 5 et les deuxièmes parois latérales 6, 7 se rejoignent à même hauteur, dans le plan du bloc central de l'élément de liaison 8.

La base 2, le plateau porte-pièces 3, les deux premières et deuxièmes parois latérales 4, 5, 6, 7 et l'élément de liaison 8 peuvent être formés d'une seule pièce, c'est-à-dire issus d'un même bloc de matière, formant une platine de mesure. Cette platine en un seul corps déformable peut être réalisée par exemple par découpe au fil ou par impression 3D. Selon un autre exemple, ces éléments sont fixés entre eux par exemple par vissage.

La base 2, le plateau porte-pièces 3, les deux premières et deuxièmes parois latérales 4, 5, 6, 7 et l'élément de liaison 8 sont par exemple réalisés en acier inoxydable, tel qu'en acier inoxydable martensitique trempé afin de présenter une résistance à la rupture et une dureté suffisantes pour supporter les actions de serrage et bridage sur la table de la machine et aussi de la pièce sur le plateau porte-pièces 3.

En cours d'usinage, la base 2 est fixe car bridée à la machine de fraisage. L'élément de liaison 8 peut bouger dans la première direction X grâce à l'élasticité des premières parois latérales 4, 5 (de droite à gauche et inversement sur la figure 1a).

En outre, le plateau porte-pièce 3 peut bouger dans la deuxième direction Y perpendiculaire, grâce à l'élasticité des deuxièmes parois latérales 6, 7 (d'avant en arrière et inversement sur la figure 1a).

Une première translation du plateau porte-pièces 3 dans la deuxième direction Y est ainsi possible par rapport à l'élément de liaison 8 et une deuxième translation de l'élément de liaison 8 par rapport à la base 2 est possible dans la première direction X, perpendiculaire à la deuxième direction Y.

Le dispositif 1 présente ainsi une structure pouvant se déformer dans deux directions perpendiculaires X, Y, privilégiant ainsi la translation du plateau porte-pièces 3 selon les deux directions X, Y perpendiculaires entre elles, les déformations dans ces deux directions X, Y étant bien découplées l'une de l'autre.

Le premier capteur de déformation 9 comporte par exemple au moins une jauge de contrainte par exemple collée sur une des premières parois latérales 4, 5.

Le deuxième capteur de déformation 10 comporte par exemple au moins une jauge de contrainte par exemple collée sur une des deuxièmes parois latérales 6, 7.

Les jauges de contraintes sont des extensomètres à fils résistants sensibles à des déformations en extension/compression. La mesure des efforts de fraisage au moyen de jauges de contraintes est intéressante car ces dernières ne sont pas soumises aux phénomènes de charge et ne nécessitent pas d'amplificateurs coûteux comme les platines piézoélectriques de l'art antérieur.

Bien que les jauges de contraintes soient représentées collées à mi-hauteur des parois latérales sur les figures, on agence de préférence les jauges de contrainte dans les zones de déformation maximale, c'est-à-dire et comme on le verra plus loin, dans la demi-surface supérieure ou la demi-inférieure des parois latérales.

Le premier capteur de déformation 9 comporte par exemple quatre jauges de contrainte J1, J2, J3, J4 câblées en Pont de Wheatstone, deux premières jauges de contrainte J1, J2 étant collées sur l'une des premières parois latérales 4 et deux deuxièmes jauges de contrainte J3, J4 étant collées sur l'autre des premières parois latérales 5 (figures 1a et 1b). Ce câblage est très simple et permet de ne prendre en compte que la flexion des premières parois latérales 4, 5.

On prévoit par exemple d'agencer les deux jauges de contraintes J1, J2, J3, J4 d'une même première paroi latérale 4, 5 de manière horizontale, sur une même hauteur pour qu'elles se déforment dans un même sens et déséquilibrent le Pont de Wheatstone.

De même, le deuxième capteur de déformation 10 comporte par exemple quatre jauges de contrainte J5, J6, J7, J8 câblées en Pont de Wheatstone, deux premières jauges de contrainte J5, J6 étant collées sur l'une des deuxièmes parois latérales 7 et deux deuxièmes jauges de contrainte J7, J8 étant collées sur l'autre des deuxièmes parois latérales 6 (figures 1a et 1c). Là encore, le câblage est très simple et permet de ne prendre en compte que la flexion des deuxièmes parois latérales 6, 7.

La mesure des déformations des premières parois latérales 4, 5 dans la première direction X est représentative de la composante Fx de l'effort de fraisage exercé sur la pièce à usiner fixée sur le plateau porte-pièces 3 et la mesure des déformations des deuxièmes parois latérales 6, 7 dans la deuxième direction Y perpendiculaire, est représentative de la composante Fy de l'effort de fraisage exercé sur ladite pièce à usiner.

Il est ainsi possible de mesurer les composantes Fx, Fy dans le plan (X, Y) d'une force de fraisage exercée sur une pièce à usiner fixée au plateau porte-pièces 3.

Les figures 3, 4, 5a, 5b, 5c et 6 représentent un deuxième exemple de réalisation.

Ce mode de réalisation diffère du précédent par le fait que le bloc central 12, présente ici une forme générale de pavé parallélépipédique (figure 4).

L'élément de liaison 80 comporte en outre deux éléments de raccord supérieur 13 reliant un côté supérieur du bloc central 12 aux premières parois latérales 4, 5 de part et d'autre du bloc central 12 et deux éléments de raccord inférieurs 14 reliant un côté inférieur du bloc central 12 aux deuxièmes parois latérales 6, 7 de part et d'autre du bloc central 12

En outre, le bloc central 12 est au moins partiellement agencé entre les premières parois latérales 4, 5. Il peut aussi en outre être au moins partiellement agencé entre les deuxièmes parois latérales 6, 7. Dans cet exemple, le bloc central 12 est entièrement agencé entre les premières et les deuxièmes parois latérales 4, 5, 6, 7. Les deuxièmes parois latérales 6, 7 sont ainsi « abaissées » par rapport au premier mode de réalisation. Ce deuxième mode de réalisation présente l'avantage d'être beaucoup plus compact.

La base 2, le plateau porte-pièces 3, les deux premières et deuxièmes parois latérales 4, 5, 6, 7 et l'élément de liaison 80 peuvent être formés d'une seule pièce. Cette platine en un seul corps déformable peut être réalisée par exemple par découpe au fil ou par impression 3D.

Selon un autre exemple, ces éléments sont fixés entre eux par exemple par vissage. L'élément de liaison 80 est par exemple vissé aux parois latérales 4, 5, 6, 7.

Le bloc central 12 présente par exemple une épaisseur supérieure à 2mm, telle que comprise entre 2mm et 1cm dans la direction verticale Z.

En cours d'usinage, la base 2 est fixe car bridée à la machine de fraisage. Le bloc central 12 peut bouger dans la première direction X grâce à l'élasticité des premières parois latérales 4, 5 (de droite à gauche et inversement sur la figure 3 et de haut en bas et inversement sur la figure 5c).

En outre, le plateau porte-pièces 3 peut bouger dans la deuxième direction Y grâce à l'élasticité des deuxièmes parois latérales 6, 7 (d'avant en arrière et inversement sur la figure 3 et de droite à gauche et inversement sur la figure 5b). Le déplacement du bloc central 12 dans la deuxième direction Y est négligeable.

Une première translation du plateau porte-pièces 3 est ainsi possible par rapport au bloc central 12 et une deuxième translation du bloc central 12 par rapport à la base 2 est possible dans une direction perpendiculaire à la première translation.

Le dispositif de mesure d'efforts 1 présente ainsi une structure pouvant se déformer dans deux directions perpendiculaires X, Y (figure 5a), privilégiant ainsi la translation du plateau porte-pièces 3 selon les deux directions X, Y perpendiculaires entre elles, les déformations dans ces deux directions X, Y étant bien découplées l'une de l'autre.

L'effort Fz de traction/compression exercé sur la pièce à usiner peut également être déterminé, par exemple comme réalisé en référence à la figure 6.

Le dispositif de mesure d'efforts de fraisage 1 peut en effet comporter un troisième capteur de déformation 11 configuré pour mesurer la troisième composante Fz de la force de fraisage exercée sur la pièce à usiner dans la troisième direction Z perpendiculaire aux directions X, Y.

Le troisième capteur de déformation 11 comporte par exemple des jauges de contrainte en cisaillement J9, J10, J11, J12, J13, J14, J15, J16, telles que des jauges «sapin» pour lesquelles les directions longitudinales des fils résistifs sont agencées en chevrons (voir sur la figure 6, un exemple de jauge sapin encerclée en pointillés).

On agence par exemple huit jauges de contrainte en cisaillement J9, J10, J11, J12, J13, J14, J15, J16 sur chaque face latérale des éléments de raccord supérieur 13 et inférieur 14 de l'élément de liaison 80 raccordant les parois latérales 4, 5, 6, 7 (figure 6).

Pour le câblage en Pont de Wheatstone des jauges sapins, on câble d'une part, les brins résistifs en compression J9i, J10i, J11i, J12i (côté intérieur, vers l'élément de liaison 80) et J13e, J14e, J15e, J16e (côté extérieur) et d'autre part, les brins résistifs en extension J9e, J10e, J11e, J12e (côté extérieur) et J13i, J14i, J15i, J16i (côté intérieur, vers l'élément de liaison 80) sur des branches opposées du Pont de Wheatstone, une même jauge de contrainte en cisaillement ayant un brin travaillant en élongation et un brin travaillant en compression, le sens de la déformation dépendant de l'orientation de la jauge (ici pointes en haut) sur l'élément de liaison 80 et du sens de l'effort.

Le dispositif de mesure d'effort 1 peut présenter des dimensions longitudinales et transversales plus ou moins grandes comme on peut le voir sur les deux exemples de réalisation de la figure 7.

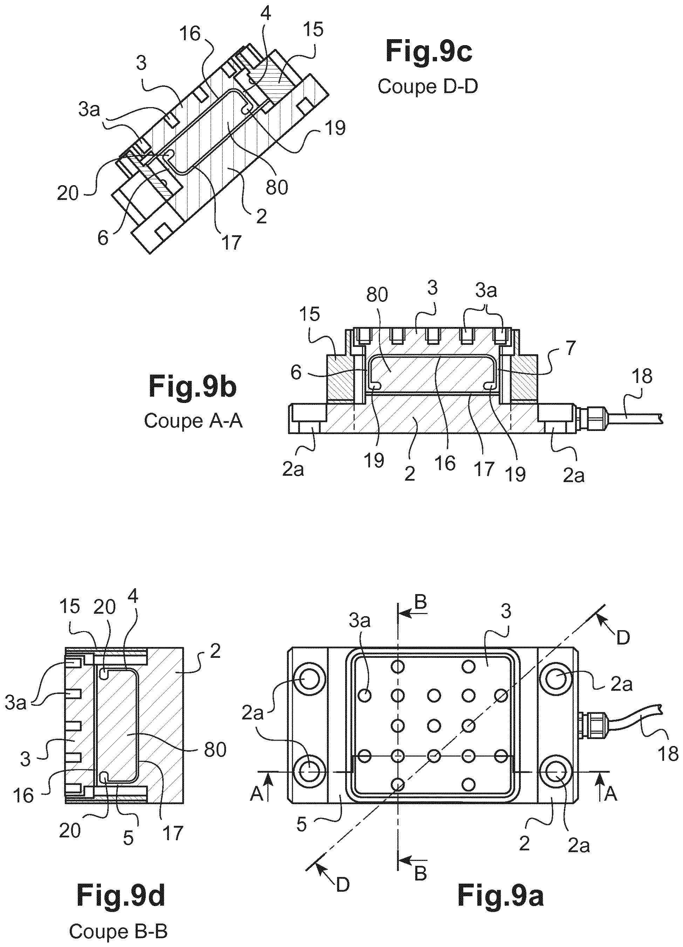

Les figures 8, 9a, 9b, 9c, 9d, 10a, 10b, 11a, 11b, 12a et 12b montrent plus en détails un des dispositifs de mesure d'efforts de fraisage 1 de la figure 7.

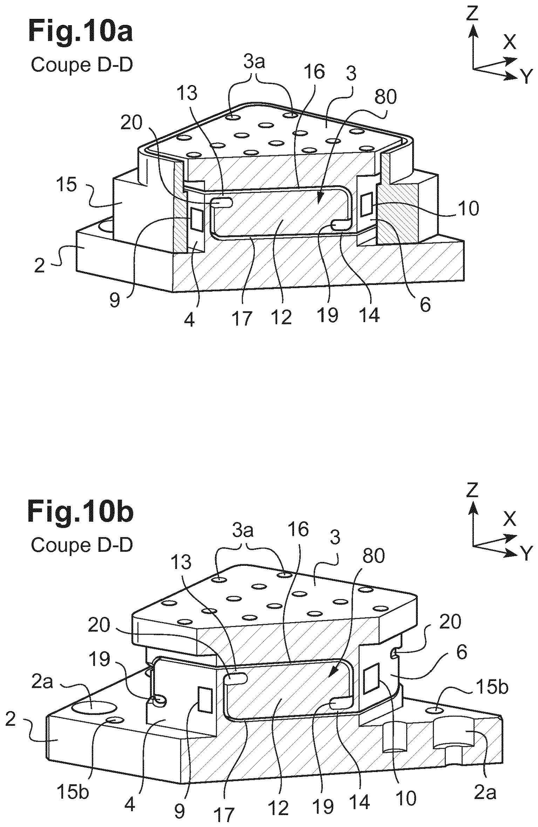

Dans cet exemple, le dispositif de mesure d'efforts 1 comporte un cache de protection 15 en forme de cadre (figure 8). Le cache de protection 15 peut être fixé à la base 2 par exemple au moyen de vis de fixation 15a insérées dans des trous taraudés 15b complémentaires de la base 2. Le cache de protection 15 affleure le plateau porte-pièces 3 et entoure le dispositif 1 sur sa hauteur pour protéger les jauges de contrainte des capteurs de déformation 9, 10 collées sur le côté extérieur des parois 4, 5, 6, 7 (figure 10a). Le cache de protection 15 est par exemple réalisé en matériau plastique.

Comme dans le second mode de réalisation, l'élément de liaison 80 comporte un bloc central 12, deux éléments de raccord supérieur 13 reliant un côté supérieur du bloc central 12 aux premières parois latérales 4, 5 et deux éléments de raccord inférieur 14 reliant un côté inférieur du bloc central 12 aux deuxièmes parois latérales 6, 7, le bloc central 12 étant agencé entre les premières parois latérales 4, 5 et les deuxièmes parois latérales 6, 7 (figure 10a). Le bloc central 12 présente par exemple une épaisseur supérieure à 2mm, telle que comprise entre 2mm et 1cm dans la direction verticale Z.

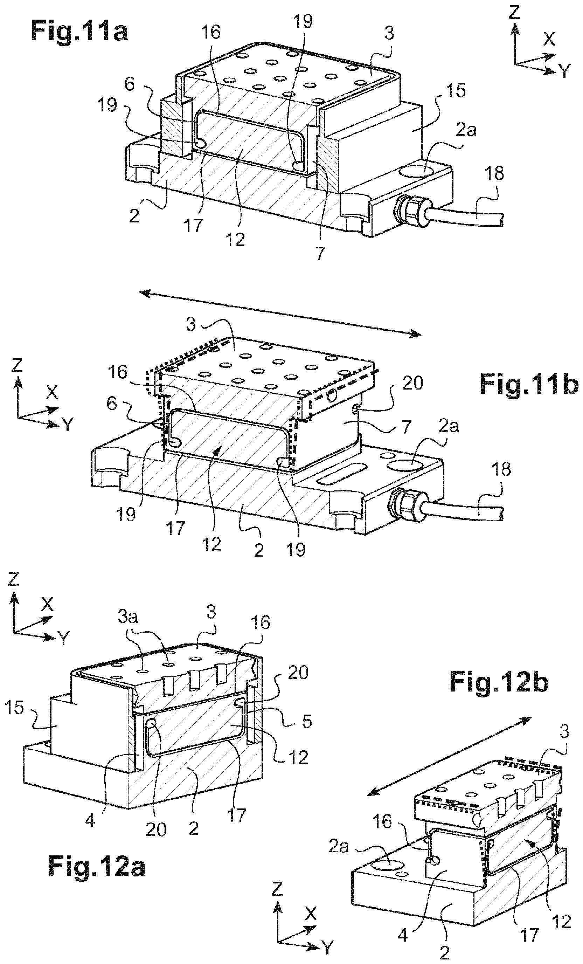

En cours d'usinage, le plateau porte-pièces 3 peut bouger dans la première direction X grâce à l'élasticité des premières parois latérales 4, 5 (d'avant en arrière et inversement sur la figure 12b). En outre, le plateau porte-pièces 3 peut bouger dans la deuxième direction Y grâce à l'élasticité des deuxièmes parois latérales 6, 7 (de droite à gauche et inversement sur la figure 11b).

En outre dans cet exemple, les deux premières parois latérales 4, 5, les deux deuxièmes parois latérales 6, 7 et l'élément de liaison 80 sont définis par une première rainure 16 en forme de « U » s'étendant dans la première direction X et une deuxième rainure 17 en forme de « U » inversé par rapport à la forme en « U » de la première rainure 16, la deuxième rainure 17 s'étendant dans la deuxième direction Y.

Les deux branches parallèles entre elles et perpendiculaires à la troisième branche de la forme de « U » de la première rainure 16 permettent de délimiter deux deuxièmes parois latérales 6, 7 parallèles entre elles et perpendiculaires au plateau porte-pièces 3 ainsi que l'élément de liaison 80. De même, les deux branches parallèles entre elles et perpendiculaires à la troisième branche de la forme de « U » de la deuxième rainure 17 permettent de délimiter deux premières parois latérales 4, 5 parallèles entre elles et perpendiculaires à la base 2 ainsi que l'élément de liaison 80.

Les rainures 16, 17 peuvent être obtenues par découpe au fil. La base 2, le plateau porte-pièces 3, les deux premières et deux deuxièmes parois latérales 4, 5, 6, 7 et l'élément de liaison 80 sont alors formés d'une seule pièce, issus d'un même bloc de matière formant une platine de mesure.

On obtient ainsi un dispositif de mesure d'efforts 1 très simple qui n'est composé que de quelques composants : la platine découpée au fil, le cache de protection 15, les vis de fixation 15a du cache 15 et des éléments de connexion 18 des capteurs de déformation 9, 10 comprenant des câbles et éventuellement une boite de dérivation (figure 8).

Pour le passage du fil de découpe, on prévoit par exemple la réalisation de trous traversant 19, 20 situés au niveau des deux extrémités des rainures 16, 17, les trous traversants 19, 20 s'étendant dans la direction dans laquelle s'étendent les rainures 16, 17. Deux trous traversants 19 situés aux extrémités de la première rainure 16 s'étendent dans la première direction X. Deux trous traversants 20 situés aux extrémités de la deuxième rainure 17 s'étendent dans la deuxième direction Y.

Les formes en « U » des rainures 16, 17 peuvent présenter des portions arrondies à la base du « U » entre les branches parallèles du « U » et la branche perpendiculaire aux branches parallèles. Les portions arrondies à la base du « U » permettent de créer des premiers congés (ou transitions douces) entre le plateau porte-pièces 3 et les deuxièmes parois latérales 6, 7 et entre la base 2 et les premières parois latérales 4, 5.

Les trous traversants 19, 20 peuvent présenter une section transversale arrondie, telle que oblongue ou cylindrique, permettant la création de deuxièmes congés entre les premières parois latérales 4, 5 et l'élément de liaison 80 et entre les deuxièmes parois latérales 6, 7 et l'élément de liaison 80.

Les congés permettent d'améliorer les caractéristiques de l'encastrement mécanique, notamment en diminuant les risques de ruptures.

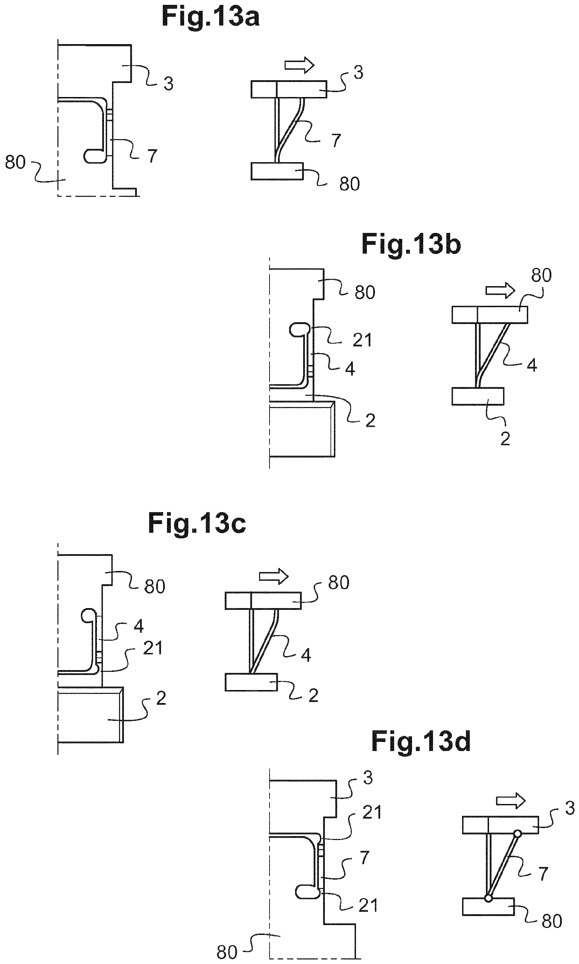

La figure 13a montre un exemple de réalisation analogue au mode de réalisation qui vient d'être décrit. La deuxième paroi latérale 7 présente une liaison de type poutre encastrée avec le plateau porte-pièces 3 et avec l'élément de liaison 80. Le capteur de déformation 10 peut avantageusement être placé dans la demi-surface supérieure, au plus près du plateau porte-pièces 3 sur la paroi latérale 7 là où la déformation est la plus importante ou dans la demi-surface inférieure, au plus près de l'élément de liaison 80.

Pour augmenter la déformation des parois latérales, et donc la sensibilité de mesure, les parois latérales 4, 5, 6, 7 peuvent être amincies localement, au niveau de leurs raccordements avec l'élément de liaison 80. La liaison obtenue au niveau de l'amincissement 21 (ou striction) est de type pivot. L'amincissement 21 donne aux premières et/ou deuxièmes parois latérales 4, 5, 6, 7 l'élasticité leur permettant de se déformer ou leur permet d'augmenter leurs capacités de déformation. La déformation de la paroi peut alors être plus importante. Cela peut également permettre de réaliser des parois latérales plus épaisses. Ainsi sur la figure 13b, la première paroi latérale 4 présente une liaison de type pivot avec l'élément de liaison 80 et une liaison de type encastrée avec la base 2. Le premier capteur de déformation 9 peut avantageusement être placé dans la demi-surface inférieure, au plus près de la base 2 sur la paroi latérale 4 où la déformation est la plus importante.

Egalement, les parois latérales 4, 5, 6, 7 peuvent être amincies localement, au niveau de leurs raccordements avec la base 2 ou le plateau porte-pièces 3. La liaison obtenue au niveau de l'amincissement 21 est de type pivot. Ainsi sur la figure 13c, la première paroi latérale 4 présente une liaison de type pivot avec la base 2 et une liaison de type encastrée avec l'élément de liaison 80. Le premier capteur de déformation 9 peut avantageusement être placé dans la demi-surface supérieure, au plus près de l'élément de liaison 80 sur la paroi latérale 4 où la déformation est la plus importante.

Il est aussi possible de prévoir que les parois latérales 4, 5, 6, 7 soient amincies au niveau de leurs raccordements avec l'élément de liaison 80 et au niveau de leurs raccordements avec la base 2 ou le plateau porte-pièces 3. Ainsi sur la figure 13d, la deuxième paroi latérale 7 présente une liaison de type pivot avec l'élément de liaison 80 et une liaison de type pivot avec le plateau porte-pièces 3.

## Revendications

1. Dispositif de mesure d'efforts de fraisage (1) configuré pour mesurer au moins deux composantes perpendiculaires (Fx, Fy) d'une force de fraisage exercée sur une pièce à usiner, ledit dispositif de mesure (1) étant **caractérisé en ce qu'**il comporte :
- une base (2) destinée à fixer le dispositif de mesure d'efforts de fraisage (1) sur une table de machine de fraisage,
- un plateau porte-pièces (3) destiné à fixer une pièce à usiner,
- deux premières parois latérales (4, 5) faisant saillie de la base (2), les premières parois latérales (4, 5) étant :
▪ planes et parallèles entre elles dans une position de repos, et
▪ déformables dans une première direction (X),
- deux deuxièmes parois latérales (6, 7) faisant saillie du plateau porte-pièces (3), les deuxièmes parois latérales (6, 7) étant :
▪ planes, parallèles entre elles et perpendiculaires aux premières parois latérales (4, 5) dans la position de repos, et
▪ déformables dans une deuxième direction (Y) perpendiculaire à la première direction (X),
- un élément de liaison (8 ; 80) reliant les premières parois latérales (4, 5) aux deuxièmes parois latérales (6, 7),
- un premier capteur de déformation (9) configuré pour mesurer une déformation d'au moins une des premières parois latérales (4, 5), et
- un deuxième capteur de déformation (10) configuré pour mesurer une déformation d'au moins une des deuxièmes parois latérales (6, 7).

2. Dispositif de mesure d'efforts de fraisage (1) selon la revendication précédente, **caractérisé en ce que** l'élément de liaison (80) comporte :
- un bloc central (12),
- deux éléments de raccord supérieur (13) reliant un côté supérieur du bloc central (12) aux premières parois latérales (4, 5), et
- deux éléments de raccord inférieur (14) reliant un côté inférieur du bloc central (12) aux deuxièmes parois latérales (6, 7), le bloc central (12) étant au moins partiellement agencé entre les premières parois latérales (4, 5).

3. Dispositif de mesure d'efforts de fraisage (1) selon la revendication précédente, **caractérisé en ce que** le bloc central (12) est agencé entre les premières parois latérales (4, 5) et les deuxièmes parois latérales (6, 7).

4. Dispositif de mesure d'efforts de fraisage (1) selon l'une des revendications 2 ou 3, **caractérisé en ce que** le bloc central (12) présente une épaisseur supérieure à 2mm.

5. Dispositif de mesure d'efforts de fraisage (1) selon l'une des revendications 2 à 4, **caractérisé en ce que** les deux premières parois latérales (4, 5), les deux deuxièmes parois latérales (6, 7) et l'élément de liaison (80) sont délimités par une première rainure (16) en forme de « U » s'étendant dans la première direction (X) et une deuxième rainure (17) en forme de « U », inversée par rapport à la première rainure (16), et s'étendant dans la deuxième direction (Y).

6. Dispositif de mesure d'efforts de fraisage (1) selon la revendication précédente, **caractérisé en ce que** les formes en « U » des rainures (16, 17) présentent des portions arrondies à la base du « U ».

7. Dispositif de mesure d'efforts de fraisage (1) selon l'une des revendications 5 ou 6, **caractérisé en ce que** les rainures (16, 17) sont réalisées par découpe au fil.

8. Dispositif de mesure d'efforts de fraisage (1) selon l'une des revendications précédentes, **caractérisé en ce que** la base (2), le plateau porte-pièces (3), les deux premières parois latérales (4, 5), les deux deuxièmes parois latérales (6, 7) et l'élément de liaison (8 ; 80) sont réalisés en une seule pièce.

9. Dispositif de mesure d'efforts de fraisage (1) selon l'une des revendications précédentes, **caractérisé en ce que** la base (2), le plateau porte-pièces (3), les deux premières et deuxièmes parois latérales (4, 5, 6, 7) et l'élément de liaison (8) sont réalisés par découpe au fil ou par impression 3D.

10. Dispositif de mesure d'efforts de fraisage (1) selon l'une des revendications précédentes, **caractérisé en ce que** le premier capteur de déformation (9) et/ou le deuxième capteur de déformation (10) comporte au moins une jauge de contrainte (J1, J2, J3, J4, J5, J6, J7, J8).

11. Dispositif de mesure d'efforts de fraisage (1) selon l'une des revendications précédentes, **caractérisé en ce que** :
- le premier capteur de déformation (9) comporte quatre jauges de contrainte (J1, J2, J3, J4) câblées en Pont de Wheatstone, deux premières jauges de contrainte (J1, J2) étant collées sur l'une des premières parois latérales (4) et deux deuxièmes jauges de contrainte (J3, J4) étant collées sur l'autre des premières parois latérales (5), et
- le deuxième capteur de déformation (10) comporte quatre jauges de contrainte (J5, J6, J7, J8) câblées en Pont de Wheatstone, deux premières jauges de contrainte (J5, J6) étant collées sur l'une des deuxièmes parois latérales (7) et deux deuxièmes jauges de contrainte (J7, J8) étant collées sur l'autre des deuxièmes parois latérales (6).

12. Dispositif de mesure d'efforts de fraisage (1) selon l'une des revendications précédentes, **caractérisé en ce que** les premières et deuxièmes parois latérales (4, 5, 6, 7) présentent une épaisseur dans la direction de déformation comprise entre 1mm et 2,5mm.

13. Dispositif de mesure d'efforts de fraisage (1) selon l'une des revendications précédentes, **caractérisé en ce que** les parois latérales (4, 5, 6, 7) sont amincies au niveau de leurs raccordements avec l'élément de liaison (8 ; 80) et/ou au niveau de leurs raccordements avec la base (2) ou le plateau porte-pièces (3).

14. Dispositif de mesure d'efforts de fraisage (1) selon l'une des revendications précédentes, **caractérisé en ce qu'**il comporte un troisième capteur de déformation (11) configuré pour mesurer une troisième composante (Fz) de la force de fraisage dans une troisième direction (Z) perpendiculaire à la première et à la deuxième direction (X, Y).

15. Dispositif de mesure d'efforts de fraisage (1) selon la revendication précédente, **caractérisé en ce que** le troisième capteur de déformation (11) comporte des jauges de contrainte en cisaillement (J9, J10, J11, J12, J13, J14, J15, J16).

16. Dispositif de mesure d'efforts de fraisage (1) selon l'une des revendications précédentes, **caractérisé en ce que** la base (2), le plateau porte-pièces (3), les deux premières parois latérales (4, 5), les deux deuxièmes parois latérales (6, 7) et l'élément de liaison (8 ; 80) sont réalisés en acier inoxydable.
